# EUROPEAN PATENT APPLICATION

(11) **EP 4 219 138 A1**
(43) Date of publication of application: **02.08.2023**
(21) Application number: 23152384.6
(22) Date of filing: 19.01.2023
(51) Int. Cl.: B30B 15/26, B30B 15/28

(54) **INFORMATION PROCESSING APPARATUS, INFORMATION PROCESSING SYSTEM, INFORMATION PROCESSING METHOD, AND CARRIER MEDIUM**

(30) Priority: 31.01.2022 JP 2022012806; 31.01.2022 JP 2022012880; 07.12.2022 JP 2022195377
(71) Applicant: Ricoh Company, Ltd., Tokyo 143-8555 (JP)
(72) Inventor: KITANO, Yuko, Tokyo, 143-8555 (JP)
(74) Representative: SSM Sandmair

(57) **Abstract**

An information processing apparatus includes an acquisition unit (76) to obtain detected information representing a detected vibration generated in processing on a workpiece, and a detection unit (78) to detect, based on the detected information, a start timing at which a punch has started striking the workpiece and a cracking timing at which the punch has cracked the workpiece.

## Description

### BACKGROUND

### Technical Field

The present disclosure relates to an information processing apparatus, an information processing system, an information processing method, and a carrier medium.

### Related Art

Japanese Examined Patent Publication No. H07- 098280 discloses a punch strike timing detection method using a vibration accelerometer attached to a punch or a die of a high-speed pressing machine. The method includes detecting, with the vibration accelerometer, a vibration at the time of the strike of the punch, extracting a desired vibration waveform through a band-pass filter, comparing a phase of the vibration waveform with a phase of a preset strike vibration waveform in normal pressing, to determine that the strike timing is improper when the vibration waveform is out of a predetermined range.

Japanese Unexamined Patent Application Publication No. 2021-146368 describes a diagnostic apparatus including a determination unit to determine a type of abnormality of a pressing machine. Specifically, the determination unit determines the type of abnormality based on characteristics of a spectrogram corresponding to the vibration of the pressing machine at a contact time when a punch contacts a workpiece and at a penetrating time when the punch penetrates the workpiece. The contact time and the penetrating time are identified based on changes with elapse of time in the load applied to the punch.

However, the timing of the processing is affected by the wear of the punch and differences between the actual conditions and the set conditions, such as the shape of the punch, the clearance of a die, and the workpiece and shape of a workpiece.

### SUMMARY

In one aspect, an information processing apparatus includes an acquisition unit to obtain detected information representing a detected vibration generated in processing on a workpiece, and a detection unit to detect, based on the detected information, a start timing at which a punch has started striking the workpiece and a cracking timing at which the punch has cracked the workpiece.

In another aspect, an information processing apparatus includes a display control unit to control a display to display at least one of timing information indicating the start timing and the cracking timing, time difference information indicating a time difference between the start timing and the cracking timing, and a comparison result indicating a result of the comparison between the time difference and reference information.

In another aspect, an information processing apparatus includes a transmission unit to transmit, to an external device external to the information processing apparatus, at least one of timing information indicating the start timing and the cracking timing, the time difference information, and the comparison result.

In another aspect, an information processing system includes the information processing apparatus described above and a communication terminal. The information processing apparatus further includes a transmission unit to transmit, to the communication terminal, at least one of timing information indicating the start timing and the cracking timing, the time difference information, and the comparison result. The communication terminal includes a reception unit to receive at least one of the timing information, the time difference information, and the comparison result; and a display control unit to control a display to display at least one of the timing information, the time difference information, and the comparison result.

In another aspect, an information processing method includes obtaining, from a sensor, detected information representing a detected vibration generated in processing on a workpiece; and detecting, based on the detected information, a start timing at which a punch has started striking the workpiece and a cracking timing at which the punch has cracked the workpiece.

In another aspect, a carrier medium carrying computer readable codes for controlling a computer system to carry out the method described above.

According to the embodiments of the present disclosure, the timing at which a punch has processed a workpiece can be accurately detected.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a general arrangement of a management system according to embodiments of the present disclosure;
FIGS. 2A, 2B, and 2C are diagrams of shearing process according to embodiments;
FIG. 3 is a block diagram illustrating a hardware configuration of a controller of a pressing machine according to embodiments;
FIG. 4 is a block diagram illustrating a hardware configuration of a diagnostic apparatus according to embodiments;
FIG. 5 is a block diagram illustrating a hardware configuration of a communication terminal and a management server according to embodiments;
FIG. 6 is a block diagram illustrating a functional configuration of the management system according to one embodiment;
FIG. 7 is a conceptual diagram of a vibration data management table according to one embodiment;
FIG. 8 is a conceptual diagram of a component data management table according to one embodiment;
FIG. 9 is a sequence diagram of an example of operation performed by the management system according to one embodiment;
FIG. 10 is a flowchart illustrating an example of detection and determination process according to one embodiment;
FIG. 11 is a table comparing an example according to one embodiment and comparative examples;
FIGS. 12A and 12B are diagrams illustrating vibration waveforms and spectra of the example according to one embodiment and one of the comparative examples illustrated in FIG. 11;
FIG. 13 is an illustration of a display screen provided by the diagnostic apparatus, according to one embodiment;
FIG. 14 is an illustration of a display screen provided by a communication terminal, according to one embodiment; and
FIG. 15 is a sequence diagram of an example of operation performed by a management system according to a modification of the embodiment illustrated in FIG. 9.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

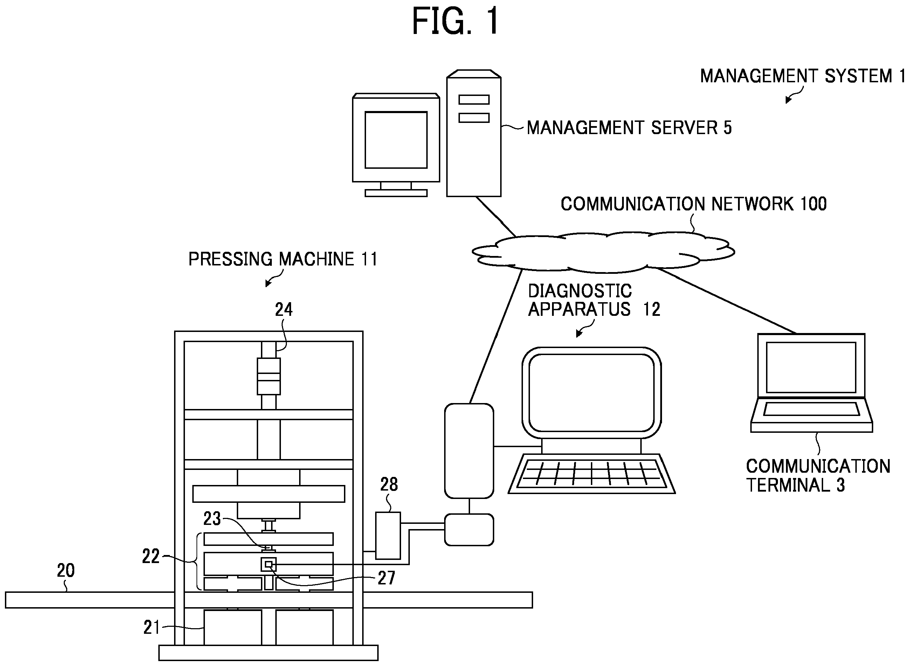

FIG. 1 is a schematic diagram illustrating an overview of a management system 1 as an information processing system according to the present embodiment. The management system 1 according to the present embodiment includes a diagnostic apparatus 12 connected to a pressing machine 11, a communication terminal 3, and a management server 5.

The diagnostic apparatus 12, the communication terminal 3, and the management server 5 are examples of an information processing apparatus. The management server 5 is an example of an external device for the diagnostic apparatus 12. The communication terminal 3 is an example of an external device for the management server 5. The diagnostic apparatus 12 is an example of a second external device for the management server 5.

The communication terminal 3 may be installed in the same factory as the pressing machine 11 and the diagnostic apparatus 12 or may be installed in a remote place.

The diagnostic apparatus 12, the communication terminal 3, and the management server 5 communicate with each other via a communication network 100. The communication network 100 is implemented by, for example, the Internet, a mobile communication network, or a local area network (LAN). The communication network 100 may include, in addition to wired communication networks, wireless communication networks in compliance with, for example, 3rd generation (3G), Worldwide Interoperability for Microwave Access (WiMAX), and long term evolution (LTE).

The pressing machine 11 is a machine that performs pressing work, that is, presses a tool against a workpiece 20 (or a material), such as a metal plate, to deform the workpiece 20. The pressing machine 11 includes a lower die 21, an upper die 22, a punch 23, a motor 24, an accelerometer 27, and a controller 28.

The workpiece 20 is secured between the lower die 21 and the upper die 22. The punch 23 is moved in the vertical direction in the drawing, driven by the motor 24. The pressing machine 11 according to the present embodiment performs shearing. Specifically, the punch 23 descends to penetrate the workpiece 20 and enter a hole in the lower die 21, thereby forming a hole in the workpiece 20.

The accelerometer 27 is a sensor that detects vibrations of the pressing machine 11 (including vibrations of the workpiece 20). The accelerometer 27 according to the present embodiment is disposed on a portion of the upper die 22, but the position is not limited thereto. The accelerometer 27 may be disposed at any position as long as the accelerometer 27 can detect vibrations of the pressing machine 11 or vibrations of the workpiece 20 generated in the pressing work. For example, the accelerometer 27 may be disposed at a position separate from the pressing machine 11. For example, the accelerometer 27 may be disposed on the workpiece 20.

The accelerometer 27 is connected to the diagnostic apparatus 12 via a sensor amplifier to communicate with each other.

The accelerometer 27 and the sensor amplifier may be built-in components of the pressing machine 11, or may be attached to the assembled pressing machine 11. The sensor amplifier is not necessarily mounted in the pressing machine 11 but may be mounted in the diagnostic apparatus 12.

The pressing machine 11 illustrated in FIG. 1 performs shearing as one type of pressing work, but the pressing machine 11 is not limited to a shearing machine. For example, the pressing machine 11 may include exchangeable tools and have the capability of performing another type of pressing work than shearing with another tool. Instead of the lower die 21, the upper die 22, and the punch 23 described above, the tool may be, for example, a movable table on which a drill, an end mill, a cutting tool tip, a grindstone, and the workpiece 20 are placed. The table is moved according to the process.

The diagnostic apparatus 12 performs processing for diagnosing the state of the pressing machine 11. The diagnostic apparatus 12 according to the present embodiment performs processing for determining the presence or absence of abnormality of the pressing machine 11 and the type of abnormality based on, for example, a signal representing a detected vibration (vibration waveform), received from the accelerometer 27, and machining control signals received from the controller 28. The signal received from the accelerometer 27 is also referred to as a detection signal or detected information.

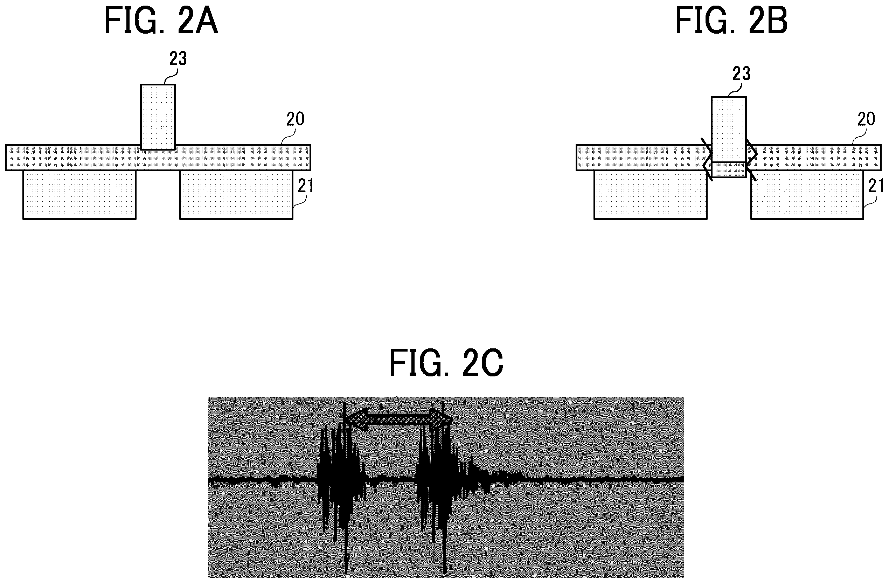

FIGS. 2A, 2B, and 2C are diagrams of shearing process according to the present embodiment.

In the shearing process, the punch 23 strikes the workpiece 20 as illustrated in FIG. 2A and cracks the workpiece 20 as illustrated in FIG. 2B.

As a result of intensive studies, the inventor has found that the wear of the punch 23 affects the timing of the shearing process illustrated in FIGS. 2A and 2B. Specifically, as will be described later, the inventor has found that the time difference between the start timing and the cracking timing in the shearing process increases as the wear of the punch 23 progresses. The inventor has also found that the timing of the shearing is affected by not only the wear of the punch 23 but also differences between the actual conditions and the set conditions, such as the shape of the punch 23, the clearance of the die, and the material and shape of the workpiece 20. A first object of the present embodiment is to accurately obtain the timing of shearing.

FIG. 2C illustrates a vibration waveform in the shearing. In the present embodiment, as will be described later, the timing of the shearing can be accurately obtained using such a vibration waveform.

Further, the inventor has focused on peaks of the vibration waveform in order to accurately obtain the timing of the shearing and has found that the timing of processing of general pressing work, not limited to the shearing, can be accurately obtained by focusing on peaks of the vibration waveform. General pressing work includes bending, drawing, forming, forging, and joining. In FIG. 2C, a reference character t represents the time between peaks of the vibration waveform.

A second object of the present embodiment is to accurately detect peaks of the vibration waveform in pressing work.

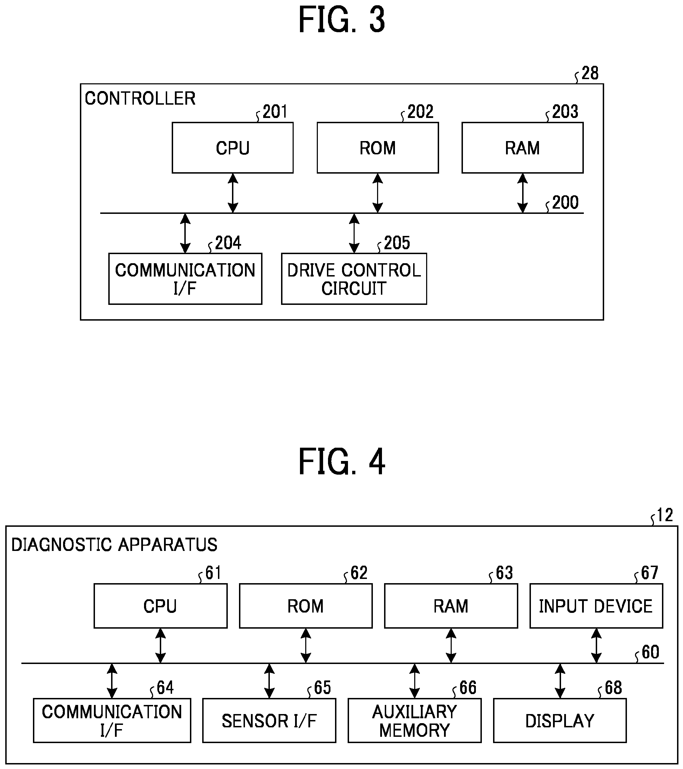

FIG. 3 is a block diagram illustrating a hardware configuration of the controller of the pressing machine according to the present embodiment.

### Hardware Configuration of Pressing Machine 11

FIG. 3 is a block diagram illustrating an example of a hardware configuration of the controller 28 of the pressing machine 11 according to the present embodiment.

The controller 28 includes a central processing unit (CPU) 201, a read only memory (ROM) 202, a random access memory (RAM) 203, a communication interface (I/F) 204, and a drive control circuit 205, which are connected to one another via a bus 200 to communicate with each other.

The CPU 201 is a processor that controls the entire operation of the pressing machine 11. For example, the CPU 201 executes a control program stored, for example, in the ROM 202 using the RAM 203 as a work area, to control the entire operation of the pressing machine 11 to execute pressing work.

The communication I/F 204 is an interface for communication with an external device such as the diagnostic apparatus 12. The communication I/F 204 is, for example, a network interface card (NIC) in compliance with transmission control protocol/internet protocol (TCP/IP).

The drive control circuit 205 is a circuit that controls the motor 24 that moves the punch 23 used for the pressing work. The drive control circuit 205 is driven in response to an instruction signal from the CPU 201.

The hardware configuration illustrated in FIG. 3 is an example, and the pressing machine 11 does not necessarily include all of the above components, and may include another component.

FIG. 4 is a block diagram illustrating a hardware configuration of the diagnostic apparatus according to the present embodiment.

### Hardware Configuration of Diagnostic Apparatus

The diagnostic apparatus 12 includes a CPU 61, a ROM 62, a RAM 63, a communication I/F 64, a sensor I/F 65, an auxiliary memory 66, an input device 67, and a display 68, which are connected via a bus 60 to communicate with each other.

The CPU 61 is a processor that controls the entire operation of the diagnostic apparatus 12. For example, the CPU 61 controls the entire operation of the diagnostic apparatus 12 by executing a program such as a diagnostic program stored in the ROM 62 or the like using the RAM 63 as a work area, to implement a diagnostic function.

The communication I/F 64 is an interface for communication with the pressing machine 11 or communication with an external device via the communication network 100. The communication I/F 64 is, for example, an NIC or the like in compliance with TCP/IP.

The sensor I/F 65 is an interface that receives detection signals (vibration information) from the accelerometer 27 installed in the pressing machine 11 via the sensor amplifier.

The auxiliary memory 66 is a non-volatile memory such as a hard disk drive (HDD), a solid state drive (SSD), and an electrically erasable programmable read-only memory (EEPROM). The auxiliary memory 66 stores various data such as setting information of the diagnostic apparatus 12, detection signals received from the pressing machine 11, context information, an operating system (OS), and an application program.

The auxiliary memory 66 is included in the diagnostic apparatus 12 in an embodiment, but the location is not limited thereto. The auxiliary memory 66 may be, for example, a memory installed outside the diagnostic apparatus 12, a memory in a cloud server capable of data communication with the diagnostic apparatus 12, and the like.

The input device 67 is a device such as a mouse or keyboard for performing input of characters and numbers, designating various instructions, and moving a cursor.

The display 68 is, for example, a cathode ray tube (CRT) display, a liquid crystal display (LCD), or an organic electro luminescence (EL) display that displays characters, numbers, various screens, operation icons, and the like.

The hardware configuration illustrated in FIG. 4 is an example, and the diagnostic apparatus 12 does not necessarily include all of the above components, and may include another component.

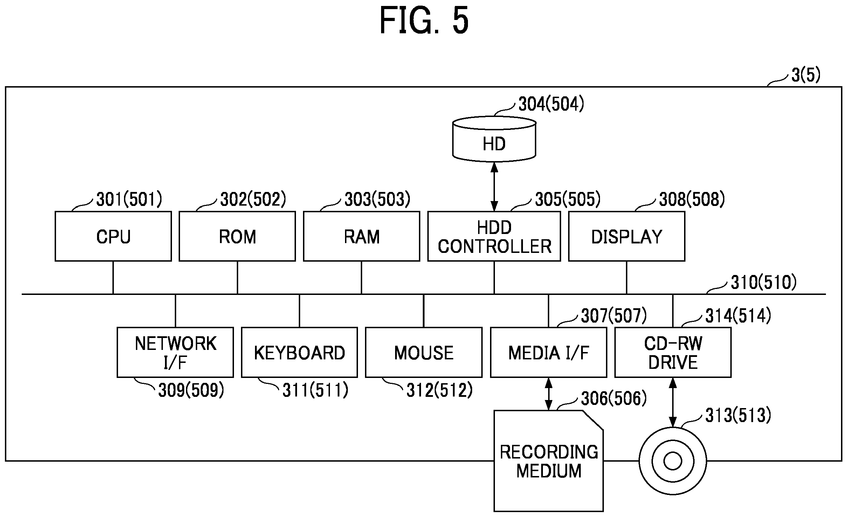

FIG. 5 is a block diagram illustrating a hardware configuration of the communication terminal and the management server according to the present embodiment. Each hardware element of the communication terminal 3 is denoted by a three-digit reference numeral in 300 series. Each hardware element of the management server 5 is denoted by a parenthesized three-digit reference numeral in 500 series.

The communication terminal 3 includes a CPU 301, a ROM 302, a RAM 303, a hard disk (HD) 304, an HDD 305, a media I/F 307 that controls reading and writing of various data from and to a recording medium 306, a display 308, a network I/F 309, a keyboard 311, a mouse 312, a compact disc-rewritable (CD-RW) drive 314, and a bus line 310.

The CPU 301 controls entire operation of the communication terminal 3. The ROM 302 stores a control program for driving the CPU 301. The RAM 303 is used as a work area for the CPU 301.

The HD 304 stores various data such as programs. The HDD 305 controls reading or writing of various data to or from the HD 304 under the control of the CPU 301.

The media I/F 307 controls reading or writing (storing) of data from or to the recording medium 306 such as a flash memory.

The display 308 displays various information such as a cursor, a menu, a window, characters, and images. The network I/F 309 is an interface for data communication via the communication network 100.

The keyboard 311 is an input device provided with a plurality of keys for a user to input characters, numerals, or various instructions. The mouse 312 is an input device for the user to select a specific instruction, instruct executing of a function, select a target object to be processed, or move a cursor being displayed. The CD-RW drive 314 reads and writes various data from and to a CD-RW 313, which is an example of a removable recording medium.

The management server 50 includes a CPU 501, a ROM 502, a RAM 503, an HD 504, an HDD 505, a media I/F 507 that controls reading and writing of various data from and to a recording medium 506, a display 508, a network I/F 509, a keyboard 511, a mouse 512, a CD-RW drive 514, and a bus line 510.

Since these components are similar in configuration to the above-described components (the CPU 301, the ROM 302, the RAM 303, the HD 304, the HDD 305, the recording medium 306, the media I/F 307, the display 308, the network I/F 309, the keyboard 311, the mouse 312, the CD-RW drive 314, and the bus line 310). Thus, the description thereof is omitted.

Instead of the CD-RW drives 314 (514), a compact disc-recordable (CD-R) drive may be used. In one example, each of the communication terminal 3 and the management server 5 is implemented by a single computer. In another example, elements (functions, means, or storage areas) of the communication terminal 3 and the management server 5 are divided into a plurality of units and are allocated to a plurality of computers.

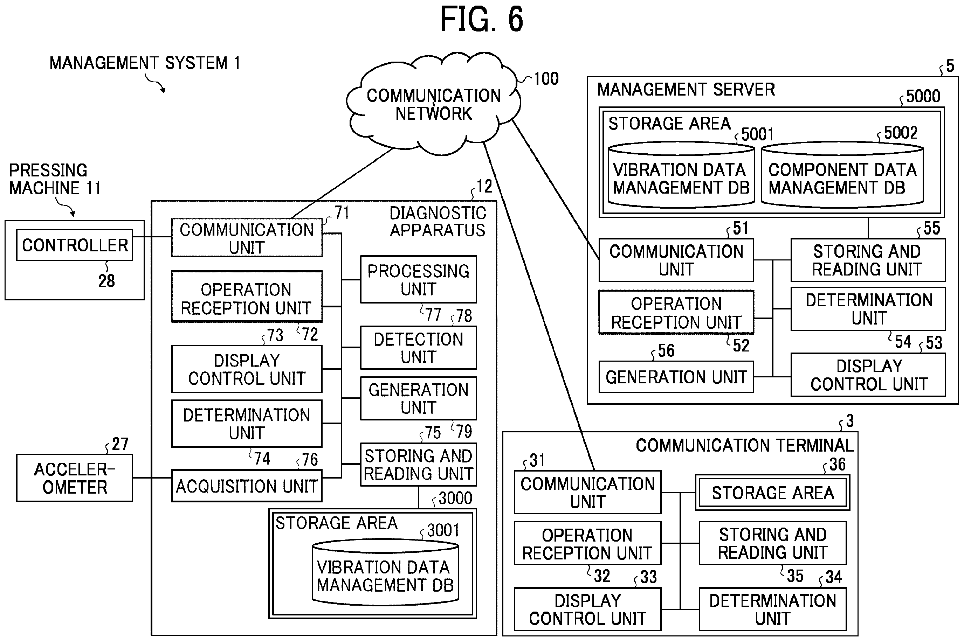

FIG. 6 is a block diagram illustrating a functional configuration of the management system according to the present embodiment.

### Functional Configuration of Diagnostic Apparatus

The diagnostic apparatus 12 includes a communication unit 71, an operation reception unit 72, a display control unit 73, a determination unit 74, a storing and reading unit 75, an acquisition unit 76, a processing unit 77, a detection unit 78, and a generation unit 79. These units of functions are implemented by or caused to function by any of the hardware components illustrated in FIG. 4 operating according to the instructions from the CPU 61 according to the control program loaded from the ROM 62 to the RAM 63. The diagnostic apparatus 12 further includes a storage area 3000 implemented by the RAM 63 and the ROM 62 illustrated in FIG. 4. The storage area 3000 is an example of a memory.

### Functional Configuration of Diagnostic Apparatus

The communication unit 71, which is an example of transmission unit, is implemented by instructions from the CPU 61 and the communication I/F 64 in FIG. 4. The communication unit 71 transmits or receives various types of data (or information) to or from the controller 28 or other terminal, device, apparatus, or system via the communication network 100.

The operation reception unit 72, which is an example of an operation reception unit, is implemented by instructions from the CPU 61 FIG. 4 and the input device 67 such as a keyboard and a mouse. The operation reception unit 72 receives various inputs from the user.

The display control unit 73, which is an example of display control unit, is implemented by instructions from the CPU 61 in FIG. 4. The display control unit 73 controls the display 68 to display various images and screens.

The determination unit 74 is implemented by instructions from the CPU 61. The determination unit 74 performs various determinations.

The storing and reading unit 75, which is an example of storing control unit, is implemented by instructions from the CPU 61 and the auxiliary memory 66 illustrated in FIG. 4. The storing and reading unit 75 stores various kinds of data in the storage area 3000 or the auxiliary memory 66 and reads various kinds of data from the storage area 3000 or the auxiliary memory 66.

The storage area 3000 includes a vibration data management database (DB) 3001 in the form of a vibration data management table.

The acquisition unit 76 is implemented by instructions from the CPU 61 and the sensor I/F 65 illustrated in FIG. 4, obtains the detection signal from the accelerometer 27 via the sensor amplifier, and obtains necessary information from the information received by the communication unit 71.

The processing unit 77 is implemented by processing of the CPU 61. The processing unit 77 performs various types of processing.

The detection unit 78 is implemented by processing of the CPU 61. The detection unit 78 performs various types of detection.

The generation unit 79 is implemented by processing of the CPU 61 and performs various types of generation.

### Functional Configuration of Communication Terminal

The communication terminal 3 includes a communication unit 31, an operation reception unit 32, a display control unit 33, a determination unit 34, and a storing and reading unit 35. These units of functions are implemented by or caused to function by any of the hardware components illustrated in FIG. 5 operating according to instructions from the CPU 301 according to the control program loaded from the HD 304 to the RAM 303. The communication terminal 3 further includes a storage area 36 implemented by the RAM 303 and HD 304 in FIG. 5. The storage area 36 is an example of a memory.

### Functional Units of Communication Terminal

The communication unit 31, which is an example of transmission unit, is implemented by instructions from the CPU 301 and the network I/F 309 in FIG. 5. The communication unit 31 transmits or receives various types of data (or information) to or from other terminal, device, apparatus, or system via the communication network 100.

The operation reception unit 32 is implemented by instructions from the CPU 301 FIG. 5, the keyboard 311, and the mouse 312. The operation reception unit 32 receives various inputs from the user.

The display control unit 33 is implemented by instructions from the CPU 301 in FIG. 5. The display control unit 33 controls the display 308 to display various images and screens.

The determination unit 34 is implemented by instructions from the CPU 301. The determination unit 34 performs various determinations.

The storing and reading unit 35, which is an example of storing control unit, is implemented by instructions from the CPU 301 in FIG. 5 and the HDD 305, the media I/F 307, and the CD-RW drive 314. The storing and reading unit 35 stores various data in the storage area 3000, the recording medium 306, or the CD-RW 313 and reads the various data from the storage area 3000, the recording medium 306, or the CD-RW 313.

### Functional Configuration of Management Server

The management server 5 includes a communication unit 51, an operation reception unit 52, a display control unit 53, a determination unit 54, a storing and reading unit 55, and a generation unit 56. These are units of functions that are implemented by or caused to function by any of the hardware components illustrated in FIG. 5 operating according to instructions from the CPU 501 according to the program loaded from the HD 504 to the RAM 503. The management server 5 includes a storage area 5000 implemented by the RAM 503 and the HD 504 in FIG. 5. The storage area 5000 is an example of a memory.

### Functional Configuration of Management Server

The communication unit 51 which is an example of transmission unit, is implemented by instructions from the CPU 501 and the network I/F 509 in FIG. 5. The communication unit 51 transmits or receives various types of data (or information) to or from other terminals, devices, apparatuses, or systems through the communication network 100.

The operation reception unit 52 is implemented by instructions from the CPU 501 FIG. 5, the keyboard 511, and the mouse 512. The operation reception unit 52 receives various inputs from the user.

The display control unit 53 is implemented by instructions from the CPU 501 in FIG. 5. The display control unit 53 controls the display 508 to display various images and screens.

The determination unit 54, which is implemented by the instructions from the CPU 501 illustrated in FIG. 5, performs various types of determination.

The storing and reading unit 55, which is an example of storing control unit, is implemented by instructions from the CPU 501 in FIG. 5 and the HDD 505, the media I/F 507, and the CD-RW drive 514. The storing and reading unit 55 stores various data in the storage area 5000, the recording medium 506, or the CD-RW 513 and reads the various data from the storage area 5000, the recording medium 506, or the CD-RW 513.

The storage area 5000 includes a vibration data management DB 5001 in the form of a vibration data management table and a component data management DB 5002 in the form of a component data management table.

The generation unit 56, which is implemented by the instructions from the CPU 501 illustrated in FIG. 5, performs various types of determination.

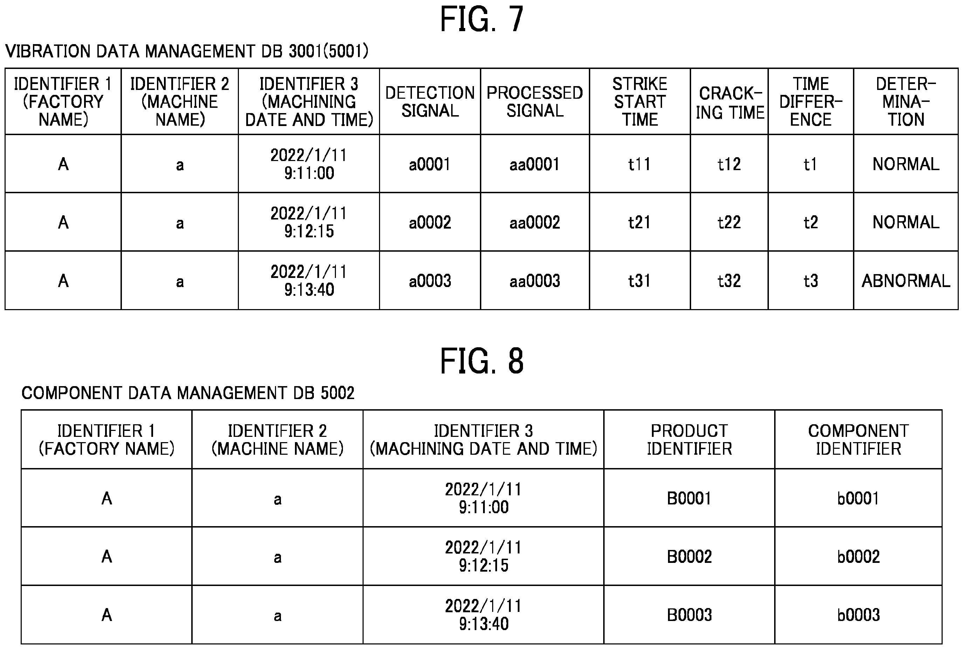

FIG. 7 is a conceptual diagram of an example of the vibration data management table according to the present embodiment.

The vibration data management table is a table for managing vibration data. The storage area 3000 includes the vibration data management DB 3001 in the form of the vibration data management table as illustrated in FIG. 7.

The storage area 5000 includes the vibration data management DB 5001 in the form of the vibration data management table as illustrated in FIG. 7. In the vibration data management table, identifiers 1 to 3, a detection signal representing the detected vibration obtained from the accelerometer 27, a processed signal, a strike start time, a cracking time, a time difference between the strike start time and the cracking time, and a determination result are stored in association with each other.

Each of the identifiers 1 to 3 is information included in signal identification information identifying the detection signal (identification information identifying the detected information). The identifier 1 (factory name) is an example of factory identifier identifying the factory in which shearing as an example of pressing work is performed. The identifier 2 (machine name) is an example of machine identifier identifying the machine that has performed the shearing. The identifier 3 (machining date and time) is an example of shearing time information indicating the time at which the shearing has been performed.

The processed signal is a signal obtained by processing the detection signal. Specifically, filtering (preferably band-pass filtering) and envelope processing are performed on the detection signal to obtain a plurality of signals, which is averaged to obtain the processed signal. The processed signal is an example of waveform information indicating a vibration waveform having a frequency of 10 kHz or more, preferably 10 to 60 kHz, and more preferably 25 to 55 kHz.

The strike start time is timing information indicating a timing at which the punch 23 has started striking the workpiece 20.

The cracking time is timing information indicating a timing at which the punch 23 has cracked the workpiece 20. The strike start time and the cracking time are examples of peak identification information identifying the peak in the vibration waveform.

The determination result is an example of comparison result indicating a result of the comparison between the time difference and reference information.

FIG. 8 is a conceptual diagram illustrating an example of the component data management table according to the present embodiment.

The component data management table is a table for managing the detection signal of vibration and component information. The storage area 5000 includes the component data management DB 5002 in the form of the component data management table as illustrated in FIG. 8. In the component data management table, items of identifiers 1 to 3, product identifier, and component identifier are stored in association with one another.

The identifiers 1 to 3 are information included in workpiece identification information identifying a workpiece. The identifiers 1 to 3 are the same information as the identifiers 1 to 3 illustrated in FIG. 7. The product identifier is information identifying a product including the workpiece as a component. The component identifier is information identifying a component using the workpiece.

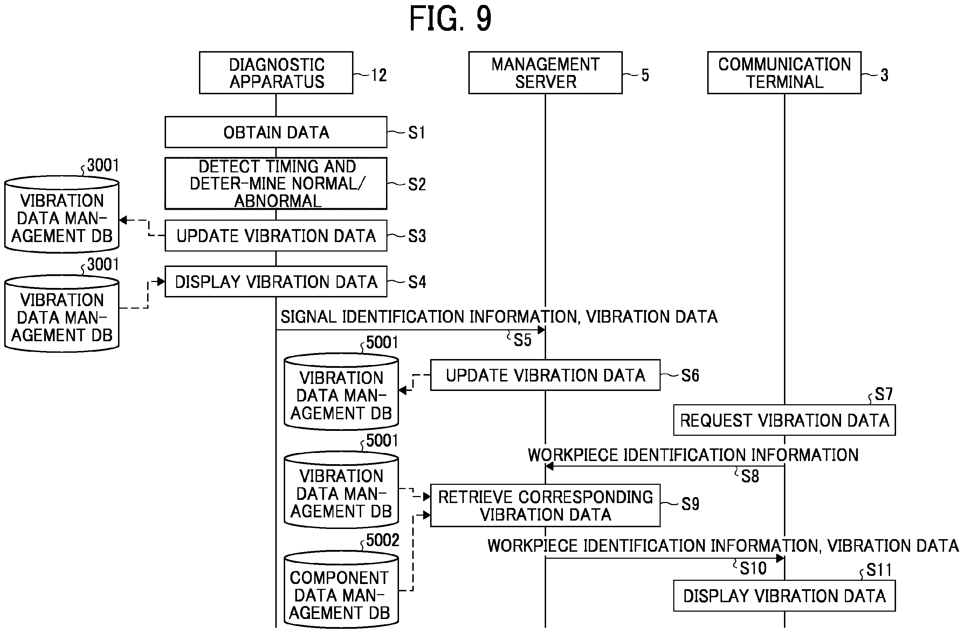

FIG. 9 is a sequence diagram of an example of operation according to the embodiment.

The acquisition unit 76 of the diagnostic apparatus 12 obtains, from the controller 28, the machining control signals for controlling the operation of the punch 23 and the signal identification information. In synchronization with the obtaining, the acquisition unit 76 obtains the detection signal representing the detected vibration from the accelerometer 27 (step S1). Step S1 is an example of obtaining a detection signal.

Based on the detection signal of vibration, the detection unit 78 detects, in the vibration waveform representing the vibration, the start timing at which the punch 23 has started striking the workpiece 20 and the cracking timing at which the punch 23 has cracked the workpiece 20. The determination unit 74 determines whether the machining is normal or abnormal based on the time difference between the start timing and the cracking timing (step S2).

Based on the signal identification information and the detection signal of vibration obtained in step S 1 and the start timing and the cracking timing detected in step S2, the storing and reading unit 75 updates the vibration data stored in the vibration data management DB 3001 (step S3). The vibration data in this specification is various data including the signal identification information (identifiers 1 to 3), the detection signal of vibration, the start timing (strike start time), and the cracking timing (cracking time) presented in FIG. 7.

When the operation reception unit 72 receives an operation of designating the signal identification information, the storing and reading unit 55 searches the vibration data management DB 3001 using the signal identification information as a search key, to retrieve the corresponding vibration data. Then, the display control unit 73 displays, on the display 68, the vibration data retrieved by the storing and reading unit 75(step S4). Step S4 is an example of displaying.

The communication unit 71 transmits the vibration data associated with the signal identification information to the management server 5 (an example of transmitting), and the communication unit 51 of the management server 5 receives the vibration data transmitted by the communication unit 71 (step S5). As a modification of step S5, the communication unit 71 may transmit the vibration data associated with the signal identification information to the communication terminal 3 (an example of the transmitting), and the communication unit 51 of the communication terminal 3 may receive the vibration data transmitted by the communication unit 71.

Based on the vibration data received in step S5, the storing and reading unit 55 updates the vibration data stored in the vibration data management DB 5001 (step S6).

When the operation reception unit 32 of the communication terminal 3 receives the operation of designating the workpiece identification information (step S7), the communication unit 31 transmits the designated workpiece identification information to the management server 5. Then, the communication unit 51 of the management server 5 receives the workpiece identification information transmitted by the communication terminal 3 (step S8).

The storing and reading unit 55 searches the component data management DB 5002 using the workpiece identification information as a search key, to retrieve the corresponding signal identification information. The storing and reading unit 55 further searches the vibration data management DB 5001 using the signal identification information as a search key, to retrieve the corresponding vibration data (step S9).

The communication unit 51 transmits the workpiece identification information and the vibration data to the communication terminal 3 (an example of transmitting), and the communication unit 31 of the communication terminal 3 receives the vibration data associated with the workpiece identification information (step S10).

The display control unit 33 displays the vibration data received in step S10 on the display 308 (step S11). Step S11 is an example of displaying. As a modification of step S11, the display control unit 33 may display, on the display 308, the vibration data received from the communication unit 71 of the diagnostic apparatus 12 in the modification of step S5.

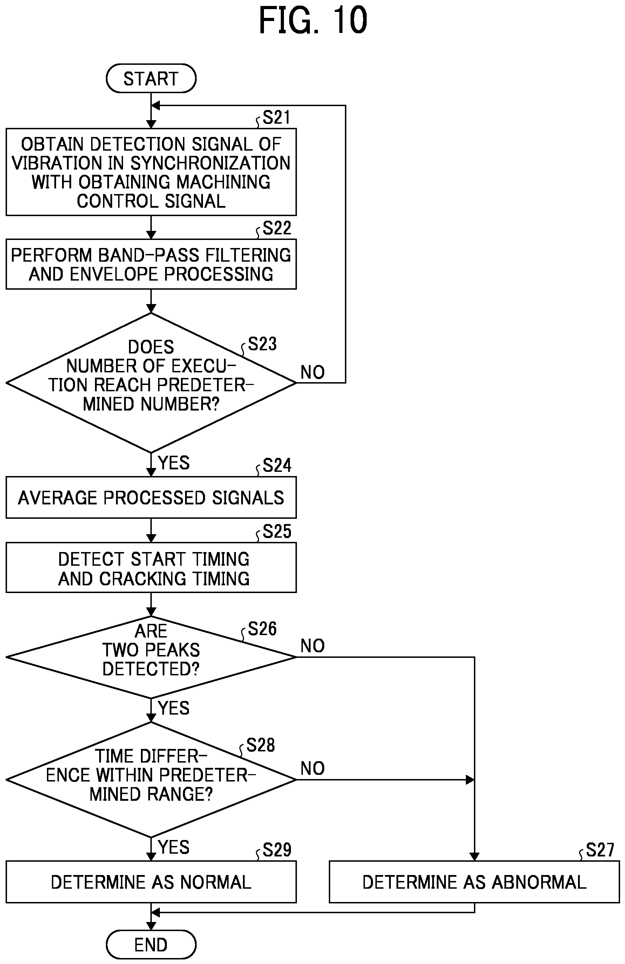

FIG. 10 is a flowchart of an example of the detection process and the determination process according to the present embodiment, which correspond to S1 and S2 of FIG. 9.

The acquisition unit 76 of the diagnostic apparatus 12 obtains, from the controller 28, the machining control signals for controlling the operation of the punch 23 and obtains the detection signal representing the detected vibration from the accelerometer 27 in synchronization with the obtaining the machining control signals (step S21).

Based on the machining control signals, the processing unit 77 determines a machining period during which the punch 23 performs machining on the workpiece 20. Then, the processing unit 77 performs band-pass filtering and envelope processing on the section of the detection signal corresponding to the machining period (step S22).

The determination unit 74 determines whether or not the number of times that step S22 has been executed for a plurality of different machining periods has reached a predetermined number (step S23). The determination unit 74 returns to step S21 when the number of times has not reached the predetermined number.

When the number of times of execution has reached the predetermined number, the processing unit 77 averages a plurality of processed signals obtained by executing step S22 for the plurality of different machining periods (S24).

In the vibration waveform of the processed signal averaged in step S24, the detection unit 78 detects peaks having an amplitude equal to or greater than a predetermined value as the start timing of strike of the workpiece 20 by the punch 23 and the cracking timing of the workpiece 20 by the punch 23 (step S25). Step S25 is an example of a detecting.

In one example, the time from the start of the machining period determined in step S22 to the first peak is used as the start timing and the time from the start of the machining period determined in step S22 to the second peak is used as the cracking timing, to calculate the time difference between the strike start time and the cracking time.

As illustrated in FIG. 2A, the start timing corresponds to the timing at which the punch 23 strikes the workpiece 20. However, at the time of the strike, the vibration waveform becomes prominent in a period from when the punch 23 comes into contact with the workpiece 20 to when a sag indicating a smooth round shape of the surface of the workpiece 20 occurs and the sheared portion advances to about half of the workpiece 20.

Accordingly, the start timing may correspond to the time from the start of the machining period determined in step S22 to when the punch 23 contacts the workpiece 20, the time from the start of the machining period determined in step S22 to when sagging occurs, or the time from the start of the machining period determined in step S22 to when the shearing of the workpiece 20 has progressed to some extent.

Alternatively, the start timing may correspond to a period including these times, for example, a period from when the punch 23 comes into contact with the workpiece 20 to when the shearing of the workpiece 20 has progressed to some extent. Alternatively, the start timing may correspond to the time point when the punch 23 contacts the workpiece 20, the time point when sagging occurs, or the time point when the shearing of the workpiece 20 has progressed to some extent, for example, to the half of the workpiece 20. The start timing (strike start time) may be the shearing start timing at which the shearing process starts.

As illustrated in FIG. 2B, the cracking timing corresponds to the timing at which the punch 23 has cracked the workpiece 20. However, at the time of the cracking, the vibration waveform becomes prominent in a certain period starting from the moment at which the workpiece 20 is cracked.

Accordingly, the cracking timing may correspond to the time from the start of the machining period determined in step S22 to when the shearing has progressed to immediately before the punch 23 penetrates the workpiece 20, the time from the start of the machining period determined in step S22 to when the punch 23 has penetrated the workpiece 20, or the time from the start of the machining period determined in step S22 to when a certain time has elapsed after the punch 23 has penetrated the workpiece 20.

Alternatively, the cracking timing may correspond to a period including these times, for example, a period from when the punch 23 contacts the workpiece 20 to when a certain time has elapsed after the punch 23 has penetrated the workpiece 20. Alternatively, the cracking timing may correspond to the time point when the shearing has progressed to the point immediately before the punch 23 penetrates the workpiece 20, the time point when the punch 23 has penetrated the workpiece 20, or the time point when a certain time has elapsed after the punch 23 has penetrated the workpiece 20. The difference between the time point when the punch 23 contacts the workpiece 20 (an example of start timing) and the time point when the shearing has progressed to the point immediately before the punch 23 penetrates the workpiece 20 (an example of cracking timing) may be calculated, to obtain the time difference between the start timing and the cracking timing to be described later.

Alternatively, the length of time from the start of the machining period determined in step S22 to when the punch 23 contacts the workpiece 20 is referred to as a first length of time, and the length of time from the start of the machining period determined in step S22 to immediately before the penetration of the workpiece 20 by the punch 23 is referred to as a second length of time. In this case, the time difference can be calculated by deducting the first length of time from the second length of time.

When the detection unit 78 does not detect the two peaks (No in step S26), the determination unit 74 determines that the machining is abnormal (step S27).

When the time difference between the start timing and the cracking timing is within a predetermined range (Yes in step S28), the determination unit 74 determines that the machining is normal (step S29). When the time difference is outside the predetermined range (No in step S28), the determination unit 74 determines that the machining is abnormal (step S27).

The determination results in step S27 and step S29 are examples of the comparison result indicating the result of the comparison between the time difference and the reference information. The predetermined range is an example of the reference information.

More specifically, when the time difference exceeds the upper limit of the predetermined range, the determination unit 74 may determine that the punch 23 is worn, and when the time difference does not reach the lower limit of the predetermined range, the determination unit 74 may determine that the machining is defective. Determination is not limited to the wear and the defective machining. The determination unit 74 may determine that the actual machining condition, for example, the shape of the punch 23, the clearance of the die, or the material and shape of the workpiece 20 is different from the set conditions when the time difference between the start timing and the cracking timing is out of the predetermined range.

As a specific example, there is experimental data that the time difference increased from 620 µs to 850 µs as the wear of the punch 23 progressed.

The predetermined value in step S25 and the predetermined range in step S28 are examples of the reference information and can be obtained by, for example, learning processing.

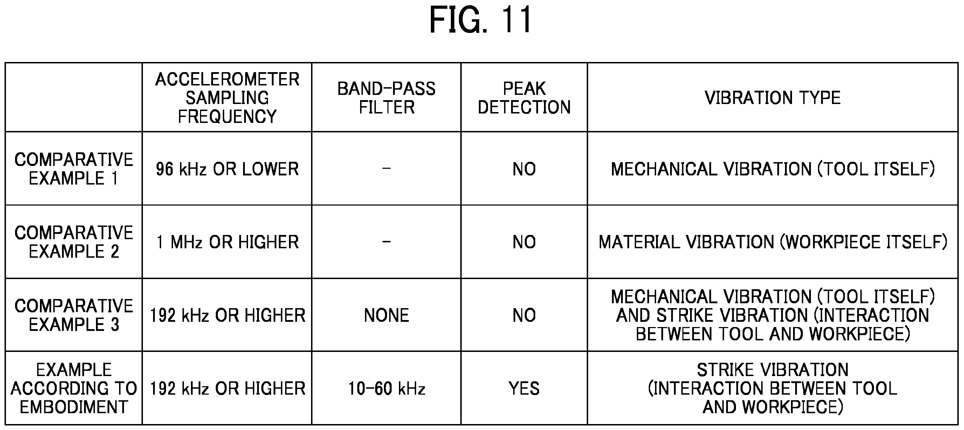

FIG. 11 is a table comparing an example according to the present embodiment and comparative examples.

In the example according to the present embodiment, the accelerometer 27 having sampling frequencies equal to or higher than 192 kHz is used as the vibration sensor, and in step S22 of FIG. 10, filtering, preferably band-pass filtering, is performed to obtain vibrations having frequencies equal to or higher than 10 kHz, preferably, 10 to 60 kHz, more preferably 25 to 55 kHz. In other words, low-frequency vibrations including mechanical vibrations having frequencies below 10 kHz, preferably below 25 kHz, are removed, and high-frequency vibrations including vibration of the material itself, having frequencies above 60 kHz, preferably above 55 kHz, are removed, in order to extract vibrations having frequencies due to interaction between the punches 23 and the workpiece 20.

As a result, in step S25 of FIG. 10, the diagnostic apparatus 12 can accurately detect peaks of the vibration waveform, having an amplitude equal to or greater than the predetermined value, as the timing at which the punch 23 has started striking the workpiece 20 and the timing at which the punch 23 has cracked the workpiece 20.

By contrast, in Comparative Example 1, although the accelerometer 27 having a sampling frequency equal to or lower than 96 kHz is used, in step S25 of FIG. 10, it is difficult to detect peaks of the vibration waveform having an amplitude equal to or greater than the predetermined value, as the timing at which the punch 23 has started striking the workpiece 20 and the timing at which the punch 23 has cracked the workpiece 20.

This is because Comparative Example 1 targets low-frequency vibration waveforms, and it is difficult to extract vibration waveforms related to the start timing or the cracking timing from various mechanical vibrations.

In Comparative Example 2, although the accelerometer 27 having a sampling frequency of equal to or higher than 1 MHz is used, it is still difficult to detect the start timing and the cracking timing.

This is because Comparative Example 2 targets high-frequency vibration waveforms related to the vibration of the material itself and does not target the frequency bandwidth corresponding to the interaction between the punch 23 and the workpiece 20.

In Comparative Example 3, although the accelerometer 27 having a sampling frequency of equal to or higher than 192 kHz is used, band-pass filtering is not performed, and it is difficult to detect the start timing and the cracking timing.

In Comparative Example 3, although the frequency bandwidth corresponding to the interaction between the punch 23 and the workpiece 20 is targeted, similarly to Comparative Example 1, it is difficult to extract the vibration waveforms related to the start timing and the cracking timing from the mixture of various mechanical vibrations.

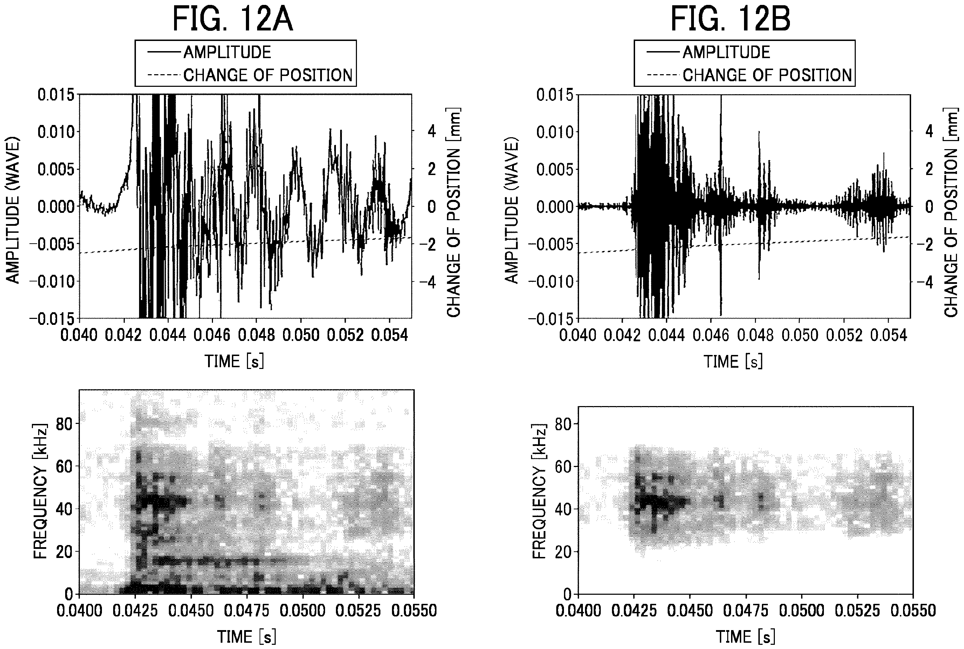

FIGS. 12A and 12B are diagrams illustrating vibration waveforms and spectra of the example according to the present embodiment and Comparative Example 3.

FIG. 12A illustrates a vibration waveform and a spectrum according to Comparative Example 3. FIG. 12B illustrates a vibration waveform and a spectrum of a processed signal averaged in step S24 of FIG. 10 according to the present embodiment.

In Comparative Example 3, as illustrated in FIG. 12A, it is difficult to identify the start timing and the cracking timing from the peaks of the vibration waveform having the amplitude equal to or greater than the predetermined value. By contrast, in the example according to the present embodiment, as illustrated in FIG. 12B, it is easy to identify the peaks corresponding to the start timing and the cracking timing.

In Japanese Examined Patent Publication No. H07-098280, a desired vibration waveform is extracted through a band-pass filter. Whether or not the strike timing of the punch is normal is determined by checking the phase difference between the vibration waveform of the punch at the normal strike timing obtained by measurement in advance and the vibration waveform of the punch at the time of actual pressing work.

However, the inventor has found that the time difference between the start timing and the cracking timing in the shearing increases as the wear of the punch 23 progresses and has researched the detection of the start timing or the cracking timing.

According to the present embodiment, for example, the detection unit 78 detects the start timing and the cracking timing and the display control unit 33 or 73 displays these timings on the screen, so that the user can determine the wear of the punch 23 referring to the time difference between the start timing and the cracking timing. Alternatively, the determination unit 74 determines the wear of the punch 23 by calculating the time difference between the start timing and the cracking timing.

Japanese Unexamined Patent Application Publication No. 2021-146368 describes determining the time when the punch comes into contact with the material and the time when the punch penetrates the material based on the change with time of the load applied to the punch. However, generally, a load sensor is integral with the punch or the die so that the load sensor receives the load, and it is difficult to retrofit the load sensor to the pressing machine. By contrast, in the present embodiment, the start timing and the cracking timing are determined based on the amplitude of the vibration waveform. There are fewer restrictions in the installation position of the accelerometer 27 that detects the vibration generated from the pressing machine 11, and retrofitting is easy. In other words, according to the present embodiment, the start timing and the cracking timing can be easily determined even when the pressing machine 11 does not include a load sensor.

Note that the example according to the present embodiment is applicable to, not limited to the shearing in which the workpiece is sheared by the punch, overall pressing work such as bending, drawing, forming, forging, and joining.

That is, the example according to the present embodiment facilitates determining the peak corresponding to the start timing at which the punch has started striking the workpiece in overall pressing work.

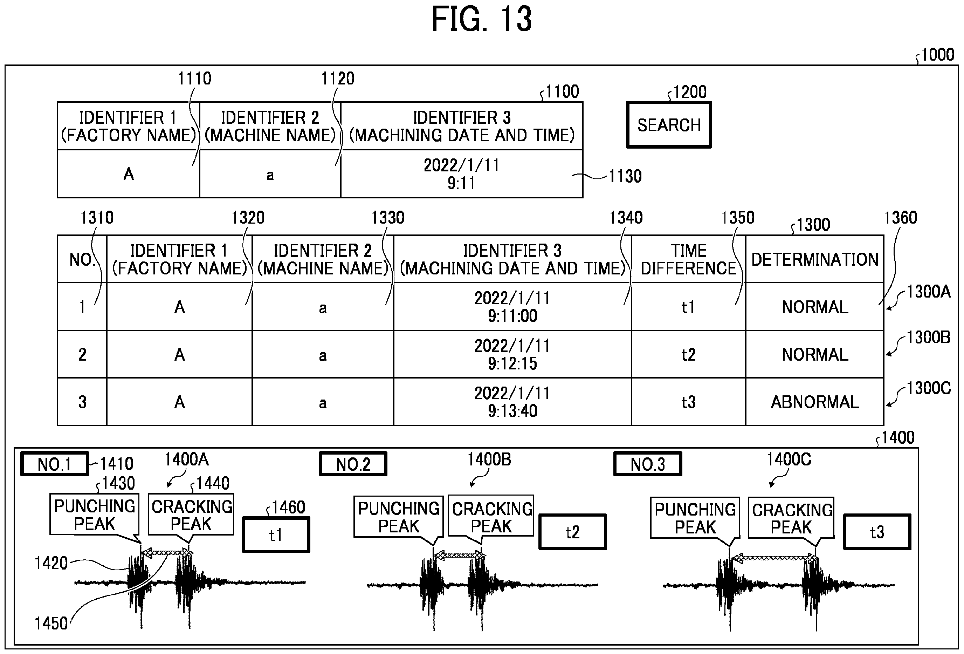

FIG. 13 is a diagram of a display screen in the diagnostic apparatus 12 according to the present embodiment. FIG. 13 illustrates a display screen 1000 displayed by the display control unit 73 on the display 68 in step S4 of FIG. 9.

The display control unit 73 displays, on the display screen 1000, a designation section 1100, a search button 1200, a data display section 1300, and a waveform display section 1400.

The search button 1200 is an example of graphical representation (or user interface (UI)) for receiving an operation of instructing displaying information related to vibration. The data display section 1300 and the waveform display section 1400 are examples of information display screen section.

The designation section 1100 is a screen section or a UI for receiving an operation of designating signal identification information identifying a detection signal. The designation section 1100 includes a first designation field 1110, a second designation field 1120, and a third designation field 1130.

The signal identification information includes the identifier 1 (factory name) which is an example of factory identifier identifying the factory in which the shearing is performed, the identifier 2 (machine name) which is an example of machine identifier identifying the machine that has performed the shearing, and the identifier 3 (machining date and time) which is an example of shearing time information indicating the time at which the shearing has been performed.

Each of the first, second, and third designation fields 1110, 1120, and 1130 is a screen section for receiving a designation operation. The first designation field 1110 is for receiving an operation of designating the identifier 1 (factory name). The second designation field 1120 is for receiving an operation of designating the identifier 2 (machine name). The third designation field 1130 is for receiving an operation of designating the identifier 3 (machining date and time).

When receiving the designation operation in the first designation field 1110, the second designation field 1120, and the third designation field 1130 and the operation of the search button 1200, the operation reception unit 72 determines the signal identification information designated in the designation section 1100.

The storing and reading unit 75 searches the vibration data management DB 3001 using the designated signal identification information as a search key, thereby retrieving the processed signal, the strike start time, the cracking time, the time difference information, and the determination result corresponding to the designated signal identification information.

The display control unit 73 displays, in the data display section 1300, the signal identification information, the time difference information, and the determination result retrieved from the vibration data management DB 3001 in association with each other. Further, the display control unit 73 displays, in the waveform display section 1400, the waveform information indicating the waveform of the vibration of the processed signal retrieved from the vibration data management DB 3001, the timing information indicating the strike start time and the cracking time in the waveform of the vibration, and the time difference information in association with each other.

The determination result is an example of the comparison result indicating the result of the comparison between the time difference and the reference information. The timing information is an example of timing information indicating the start timing and the cracking timing.

The display control unit 73 displays, in the data display section 1300, a plurality of data records 1300A to 1300C corresponding to a plurality of different signal identification information.

Each of the plurality of data records 1300A to 1300C includes items of a data record identification number 1310, an identifier 1 (factory name) 1320, an identifier 2 (machine name) 1330, an identifier 3 (machining date and time) 1340, time difference information 1350, and a determination result 1360.

The display control unit 73 displays, in the waveform display section 1400, a plurality of waveform information sets 1400A to 1400C corresponding to a plurality of different signal identification information.

Each of the plurality of waveform information sets 1400A to 1400C includes a data record identification number 1410, waveform information 1420, a timing indication 1430 indicating the timing of start of the strike in the vibration waveform, a timing indication 1440 indicating the timing of occurrence of the cracking in the vibration waveform, a time difference indication 1450 indicating the time difference in the vibration waveform, and time difference information 1460.

Since the data record identification number 1410 is the same as the data record identification number 1310, it can be said that each of the plurality of waveform information sets 1400A to 1400C is displayed in association with the identifier 1 (factory name) 1320, the identifier 2 (machine name) 1330, and the identifier 3 (machining date and time) 1340.

The display control unit 73 may display, in the waveform display section 1400, the waveform information indicating the waveform of the vibration of the detection signal retrieved from the vibration data management DB 3001 by the storing and reading unit 75. Further, as a modification of step S11 in FIG. 9, the display screen 1000 illustrated in FIG. 13 may be displayed by the display control unit 33 of the communication terminal 3 on the display 308 of the communication terminal 3.

Although, in FIG. 13, the timing indication 1430 indicating the timing of start of the strike in the vibration waveform, the timing indication 1440 indicating the timing of occurrence of the cracking in the vibration waveform, the time difference indication 1450 indicating the time difference in the vibration waveform, and the time difference information 1460 are displayed for the waveform information 1420, the contents displayed for the waveform information 1420 are not limited thereto.

Examples displayed as the timing indication 1430 (indicating the timing of start of striking the workpiece 20 in the vibration waveform) include the time from the start of the machining period determined in step S22 in FIG. 10 to when the punch 23 contacts the workpiece 20, the time from the start of the machining period determined in step S22 to when sagging occurs, the time from the start of the machining period determined in step S22 to when the shearing of the workpiece 20 has progressed to some extent, the time point when the punch 23 contacts the workpiece 20, the time point when sagging occurs, and the time point when the shearing of the workpiece 20 has progressed to some extent, for example, to the half of the workpiece 20.

Examples displayed as the timing indication 1440 (indicating the timing of occurrence of the cracking in the vibration waveform) include the time from the start of the machining period determined in step S22 in FIG. 10 to when the shearing has progressed to immediately before the punch 23 penetrates the workpiece 20, the time from the start of the machining period determined in step S22 to when the punch 23 has penetrated the workpiece 20, the time from the start of the machining period determined in step S22 to when a certain time has elapsed after the punch 23 has penetrated the workpiece 20, the time point when the shearing has progressed to the point immediately before the punch 23 penetrates the workpiece 20, the time point when the punch 23 has penetrated the workpiece 20, and the time point when a certain time has elapsed after the punch 23 has penetrated the workpiece 20.

As the time difference information 1460, the value calculated as the difference between the above-described cracking timing and the start timing may be displayed.

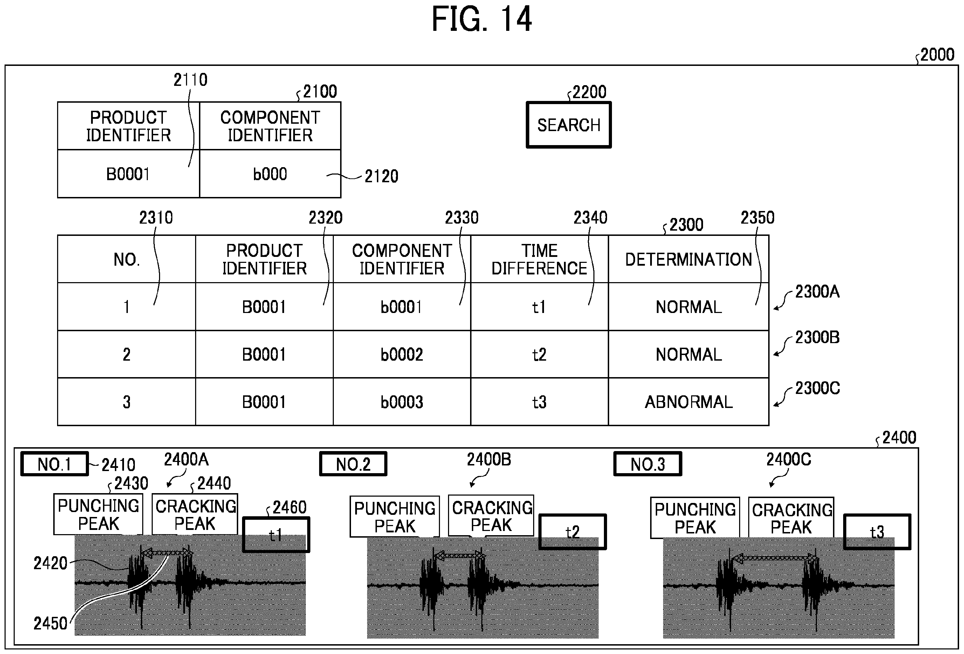

FIG. 14 is a diagram of a display screen on the communication terminal 3 according to the present embodiment. FIG. 14 illustrates a display screen 2000 displayed by the display control unit 33 on the display 308 in steps S7 and S11 in FIG. 9.

The display control unit 33 displays, on the display screen 2000, a designation section 2100, a search button 2200, a data display section 2300, and a waveform display section 2400.

The search button 2200 is an example of graphical representation (or UI) for receiving an operation of instructing displaying information related to vibration. The data display section 2300 and the waveform display section 2400 are examples of information display screen.

The designation section 2100 is a screen section or a UI for receiving an operation of designating workpiece identification information identifying a workpiece. The designation section 2100 includes a first designation field 2110 and a second designation field 2120.

The workpiece identification information includes a product identifier and a component identifier. The product identifier identifies a product including the workpiece as a component. The component identifier identifies a component using the workpiece.

The first designation field 2110 is a screen section or a UI for receiving an operation of designating the product identifier. The second designation field 2120 is a screen section or a UI for receiving an operation of designating the component identifier.

When receiving the designation operation in the first designation field 2110 and the second designation field 2120 and the operation of the search button 2200, the operation reception unit 32 determines the workpiece identification information designated in the designation section 2100.

The communication unit 31 transmits the designated workpiece identification information to the management server 5, and receives the workpiece identification information, the processed signal, the strike start time, the cracking time, the time difference information, and the determination result transmitted from the management server 5.

The display control unit 33 displays, in the data display section 2300, the workpiece identification information, the time difference information, and the determination result received by the communication unit 31, in association with each other. Further, the display control unit 33 displays, in the waveform display section 2400, the waveform information indicating the waveform of the vibration of the processed signal, the timing information indicating the strike start time and the cracking time in the waveform of the vibration, and the time difference information received by the communication unit 31, in association with each other.

The display control unit 33 displays, in the data display section 2300, a plurality of data records 2300A to 2300C corresponding to a plurality of different workpiece identification information.

Each of the plurality of data records 2300A to 2300C includes items of a data record identification number 2310, a product identifier 2320, a component identifier 2330, time difference information 2340, and a determination result 2350.

The display control unit 33 displays, in the waveform display section 2400, a plurality of waveform information sets 2400A to 2400C corresponding to a plurality of different workpiece identification information.

Each of the plurality of waveform information sets 2400A to 2400C includes a data record identification number 2410, waveform information 2420, a timing indication 2430 indicating the timing of start of the strike in the vibration waveform, a timing indication 2440 indicating the timing of occurrence of the cracking in the vibration waveform, a time difference indication 2450 indicating the time difference in the vibration waveform, and time difference information 2460.

Since the data record identification number 2410 is the same as the data record identification number 2310, it can be said that each of the plurality of waveform information sets 2400A to 2400C is displayed in association with the product identifier 2320 and the component identifier 2330.

The display control unit 33 may display, in the waveform display section 2400, the waveform information indicating the waveform of the vibration of the detection signal retrieved from the vibration data management DB 3001 by the storing and reading unit 75.

Although, in FIG. 14, the timing indication 2430 indicating the timing of start of the strike in the vibration waveform, the timing indication 2440 indicating the timing of occurrence of the cracking in the vibration waveform, the time difference indication 2450 indicating the time difference in the vibration waveform, and the time difference information 2460 are displayed for the waveform information 2420, the contents displayed for the waveform information 2420 are not limited thereto.

Examples displayed as the timing indication 2430 (indicating the timing of start of striking the workpiece 20 in the vibration waveform) include the time from the start of the machining period determined in step S22 in FIG. 10 to when the punch 23 contacts the workpiece 20, the time from the start of the machining period determined in step S22 to when sagging occurs, the time from the start of the machining period determined in step S22 to when the shearing of the workpiece 20 has progressed to some extent, the time point when the punch 23 contacts the workpiece 20, the time point when sagging occurs, and the time point when the shearing of the workpiece 20 has progressed to some extent, for example, to the half of the workpiece 20.

Examples displayed as the timing indication 2440 (indicating the timing of occurrence of the cracking in the vibration waveform) include the time from the start of the machining period determined in step S22 in FIG. 10 to when the shearing has progressed to immediately before the punch 23 penetrates the workpiece 20, the time from the start of the machining period determined in step S22 to when the punch 23 has penetrated the workpiece 20, the time from the start of the machining period determined in step S22 to when a certain time has elapsed after the punch 23 has penetrated the workpiece 20,the time point when the shearing has progressed to the point immediately before the punch 23 penetrates the workpiece 20, the time point when the punch 23 has penetrated the workpiece 20, and the time point when a certain time has elapsed after the punch 23 has penetrated the workpiece 20.

As the time difference information 2460, the value calculated as the difference between the above-described cracking timing and the start timing may be displayed.

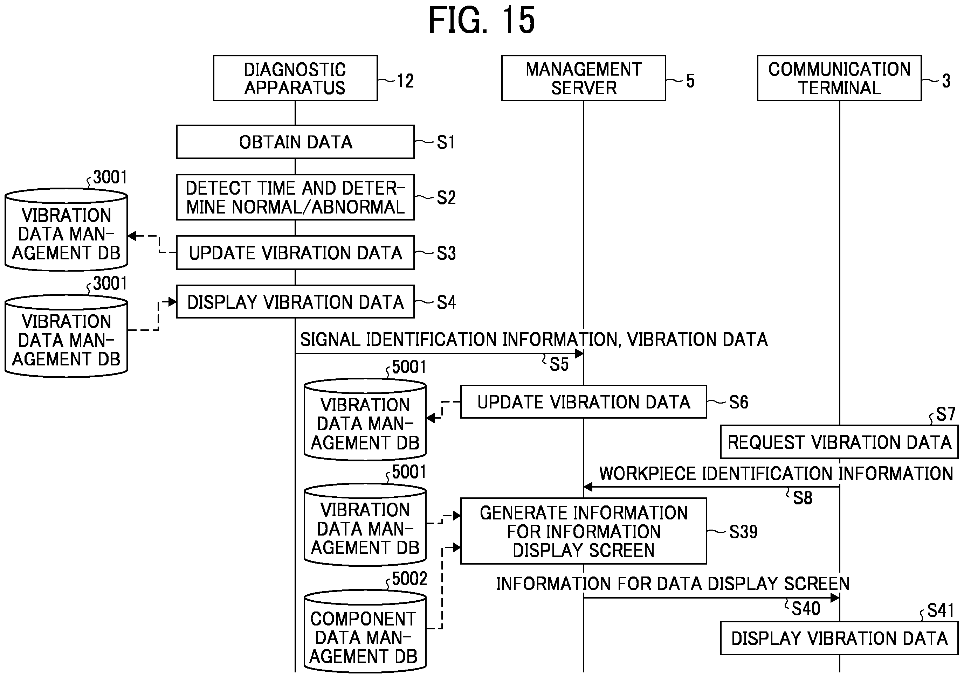

FIG. 15 is a sequence diagram of an example of operation performed by a management system according to a modification of the present embodiment.

In the sequence diagram of FIG. 15, steps S39 to S41 are executed instead of steps S9 to S11 in FIG. 9. Other than that, the operation is similar to that illustrated in FIG. 9.

After step S8, similar to step S9, the storing and reading unit 55 searches the component data management DB 5002 using the workpiece identification information as a search key, to retrieve the corresponding signal identification information. The storing and reading unit 55 further searches the vibration data management DB 5001 using the signal identification information as a search key, to retrieve the corresponding vibration data.

Then, based on the vibration data retrieved from the vibration data management DB 5001, the generation unit 56 generates screen information for displaying a screen image including the data display section 2300 and the waveform display section 2400 illustrated in FIG. 14 (step S39).

The communication unit 51 transmits screen information generated by the generation unit 56 to the communication terminal 3 (an example of transmitting), and the communication unit 31 of the communication terminal 3 receives the screen information (step S40).

The display control unit 33 displays, on the display 308, the screen according to the screen information received in step S40 (step S41). Step S41 is an example of displaying.

### Aspect 1

As described above, the diagnostic apparatus 12 as an example of an information processing apparatus according to Aspect 1 includes the acquisition unit 76 that obtains detected information (detection signal) representing a detected vibration generated in processing on the workpiece 20, and the detection unit 78 that detects the start timing at which the punch 23 has started striking the workpiece 20 and the cracking timing at which the punch 23 has cracked the workpiece 20 based on the detected information. The acquisition unit 76 preferably obtains the detected information of vibration from the accelerometer 27 disposed in the pressing machine 11 that performs shearing the workpiece 20 with the punch 23. However, the accelerometer 27 may be installed at a position separated from the pressing machine 11 or may be installed at the workpiece 20.

By detecting the start timing at which the punch 23 has started striking the workpiece 20 and the cracking timing at which the punch 23 has cracked the workpiece 20 based on the detected information of vibration, the timing at which the shearing has been performed can be accurately detected even in the pressing machine 11 that does not include a load sensor.

The pressing machine 11 is an example of a shearing machine, the accelerometer 27 is an example of a vibration sensor, and the acquisition unit 76 is an example of an acquisition unit to obtain detected information of a vibration.

### Aspect 2

In Aspect 1, the detection unit 78 detects the start timing and the cracking timing based on the amplitude of the vibration waveform indicating the vibration. Thus, the start timing and the cracking timing can be detected with high accuracy.

### Aspect 3

The diagnostic apparatus 12 of Aspect 1 or 2 further includes the storing and reading unit 75 (an example of a storing control unit) that stores at least one of: the start timing and the cracking timing, and the time difference therebetween in the storage area 3000.

This makes it possible to utilize at least one of: the start timing and the cracking timing, and the time difference therebetween.

### Aspect 4

In the diagnostic apparatus 12 of Aspect 3, the storing and reading unit 75 stores the start timing, the cracking timing, and the time difference therebetween in the storage area 3000 in association with identification information identifying the detected information (detection signal).

With this configuration, at least one of: the start timing and the cracking timing, and the time difference therebetween can be utilized in association with the identification information identifying the detected information.

### Aspect 5

In Aspects 1 to 4, the diagnostic apparatus 12 includes the display control unit 73 that controls the display 68 (an example of a display) to display at least one of: timing information indicating the start timing and the cracking timing; time difference information indicating the time difference therebetween; and a comparison result between the time difference and reference information.

Accordingly, the diagnostic apparatus 12 allows the user to easily grasp at least one of the timing information indicating the start timing and the cracking timing, the time difference information indicating the time difference therebetween, and the comparison result indicating the result of comparing the time difference with the reference information.

### Aspect 6

In Aspect 5, the display control unit 73 controls the display 68 to display at least one of the timing information, the time difference information, and the comparison result in association with the identification information identifying the detected information.

Accordingly, the user can easily grasp at least one of the timing information, the time difference information, and the comparison result in association with the identification information identifying the detected information.

### Aspect 7

In Aspect 6, the display control unit 73 controls the display 68 to display at least one of the timing information, the time difference information, and the comparison result in association with the identification information identifying the detected information, designated on the designation section 1100 (screen section) that receives the operation of designating the identification information.

Accordingly, the diagnostic apparatus 12 allows the user to easily grasp at least one of the timing information, the time difference information, and the comparison result corresponding to the detected information having the designated identification information.

### Aspect 8

In any one of Aspects 4, 6, and 7, the identification information identifying the detected information includes shearing time information indicating a time at which the shearing has been performed. Accordingly, the user can easily grasp at least one of the timing information, the time difference information, and the comparison result in association with the shearing time information indicating the time at which the shearing has been performed.

### Aspect 9

In any one of Aspects 1 to 8, the diagnostic apparatus 12 includes the communication unit 71 which is an example of the transmission unit that transmits at least one of the timing information, the time difference information, and the comparison result to the management server 5 which is an example of the external device.

Thus, the diagnostic apparatus 12 can share at least one of the timing information, the time difference information, and the comparison result with the management server 5.

### Aspect 10

The diagnostic apparatus 12 and the communication terminal 3 which are examples of an information processing apparatus according to Aspect 10 include the display control units 73 and 33, respectively. The display control units 73 and 33 control the displays 68 and 308 to display at least one of time difference information and a comparison result based on an instruction operation to the search buttons 1200 and 2200, respectively. The search buttons 1200 and 2200 are examples of graphical representation for receiving an operation of instructing displaying information on vibration generated in shearing of the workpiece 20 by the punch 23. The time difference information indicates the time difference between the start timing (at which the punch 23 has started striking the workpiece 20) and the cracking timing (at which the punch 23 has cracked the workpiece 20). The comparison result is the result of the comparison between the time difference and the reference information.

Accordingly, the diagnostic apparatus 12 allows the user to easily grasp at least one of the time difference information indicating the time difference between the start timing and the cracking timing and the comparison result between the time difference and the reference information corresponding to the detected information having the designated identification information.

### Aspect 11

In Aspect 10, the display control units 73 and 33 respectively control the displays 68 and 308 to display at least one of the time difference information and the comparison result in association with the shearing time information indicating the time at which the shearing has been performed or the workpiece identification information identifying the workpiece 20.

Accordingly, the diagnostic apparatus 12 allows the user to easily grasp at least one of the time difference information indicating the time difference between the start timing and the cracking timing and the comparison result indicating the result of the comparison between the time difference and reference information, corresponding to the detected information having the designated identification information, in association with the shearing time information indicating the time at which the shearing has been performed or the workpiece identification information identifying the workpiece 20.

### Aspect 12

The diagnostic apparatus 12 and the management server 5 as examples of the information processing apparatus according to Aspect 12 include the communication units 71 and 51 as examples of the transmission unit that transmits, to the management server 5 and the communication terminal 3 as examples of the external device, at least one of the time difference information and the comparison result. The time difference information indicates the time difference between the start timing (at which the punch 23 has started striking the workpiece 20) and the cracking timing (at which the punch 23 has cracked the workpiece 20). The comparison result is the result of the comparison between the time difference and the reference information.

This configuration allows the management server 5 and the communication terminal 3 to share at least one of the time difference information indicating the time difference between the start timing and the cracking timing and the comparison result between the time difference and the reference information.

### Aspect 13

In Aspect 12, the communication units 71 and 51 respectively transmit at least one of the time difference information and the comparison result to the management server 5 and the communication terminal 3 in association with the shearing time information indicating the time at which the shearing has been performed or the workpiece identification information identifying the workpiece 20.

This configuration allows the management server 5 and the communication terminal 3 to share at least one of the time difference information indicating the time difference between the start timing and the cracking timing and the comparison result between the time difference and the reference information in association with the shearing time information indicating the time at which the shearing has been performed or the workpiece identification information identifying the workpiece 20.

### Aspect 14

In Aspect 13, the communication unit 51 of the management server 5 transmits screen information for displaying the data display sections 1300 and 2300 including at least one of the time difference information and the comparison result, to the communication terminal 3.

Accordingly, the data display sections 1300 and 2300 including at least one of the time difference information and the comparison result can be shared with the communication terminal 3.

### Aspect 15

The management server 5 includes the communication unit 51 (a reception unit) to receive, from the diagnostic apparatus 12 (an example of second external device), at least one of: the time difference information indicating the time difference between the start timing (at which the punch 23 has started striking the workpiece 20) and the cracking timing (at which the punch 23 has cracked the workpiece 20; and the comparison result between the time difference and the reference information) in association with the shearing time information indicating the time at which the shearing has been performed. The communication unit 51 transmits at least one of the time difference information and the comparison result to the communication terminal 3 in association with the workpiece identification information identifying the workpiece 20.

Thus, at least one of the time difference information and the comparison result received in association with the shearing time information indicating the time at which the shearing has been performed can be transmitted to the communication terminal 3 in association with the workpiece identification information.

### Aspect 16

The management system 1 as an example of the information processing system according to Aspect 16 includes the diagnostic apparatus 12 and the communication terminal 3 to communicate with the diagnostic apparatus 12. The diagnostic apparatus 12 includes the acquisition unit 76 to obtain detected information of vibration from the accelerometer 27 disposed in the pressing machine 11 that performs shearing the workpiece 20 with the punch 23, the detection unit 78 to detect the start timing at which the punch 23 has started striking the workpiece 20 and the cracking timing at which the punch 23 has cracked the workpiece 20 based on the detected information, and the communication unit 71 to transmit at least one of the time difference information indicating the time difference between the start timing and the cracking timing and the comparison result between the time difference and the reference information. The communication terminal 3 includes the communication unit 31 (a reception unit) to receive at least one of the time difference information and the comparison result, and the display control unit 33 to control the display 308 to display at least one of the time difference information and the comparison result.

### Aspect 17

The management system 1 as an example of the information processing system according to Aspect 17 includes the management server 5, and the diagnostic apparatus 12 as an example of the information processing apparatus to communicate with the management server 5, and the communication terminal 3 as another example of the information processing apparatus to communicate with the management server 5. The diagnostic apparatus 12 includes the acquisition unit 76 to obtain detected information of vibration from the accelerometer 27 disposed in the pressing machine 11 that performs shearing the workpiece 20 with the punch 23, the detection unit 78 to detect the start timing at which the punch 23 has started striking the workpiece 20 and the cracking timing at which the punch 23 has cracked the workpiece 20 based on the detected information, and the communication unit 71 (a transmission unit) to transmit, to the management server 5, at least one of the time difference information indicating the time difference between the start timing and the cracking timing and the comparison result between the time difference and the reference information, in association with the shearing time information indicating the time at which the shearing has been performed. The management server 5 includes the communication unit 51 (a reception unit) to receive, from the information processing apparatus (the diagnostic apparatus 12), at least one of the time difference information and the comparison result in association with the shearing time information, and transmit, to the communication terminal 3, at least one of the time difference information and the comparison result in association with the workpiece identification information identifying the workpiece 20. The communication terminal 3 includes the communication unit 31 (a reception unit) to receive at least one of the time difference information and the comparison result in association with the workpiece identification information, and the display control unit 33 to control the display 308 to display at least one of the time difference information and the comparison result in association with the workpiece identification information.

### Aspect 18

An information processing method according to Aspect 18 includes obtaining detected information of vibration from the accelerometer 27 disposed in the pressing machine 11 that performs shearing the workpiece 20 with the punch 23, and detecting the start timing at which the punch 23 has started striking the workpiece 20 and the cracking timing at which the punch 23 has cracked the workpiece 20 based on the detected information.

### Aspect 19

An information processing method according to Aspect 19 includes displaying, on the display 68 or 308, at least one of time difference information and a comparison result based on an instruction operation to a graphical representation for receiving an operation of instructing displaying information on vibration generated in shearing of the workpiece 20 by the punch 23. The time difference information indicates the time difference between the start timing (at which the punch 23 has started striking the workpiece 20) and the cracking timing (at which the punch 23 has cracked the workpiece 20). The comparison result is the result of the comparison between the time difference and the reference information.

### Aspect 20

An information processing method according to Aspect 20 includes transmitting, to the management server 5 and the communication terminal 3 as examples of the external device, at least one of the time difference information indicating the time difference between the start timing (at which the punch 23 has started striking the workpiece 20) and the cracking timing (at which the punch 23 has cracked the workpiece 20), and the comparison result between the time difference and the reference information.

### Aspect 21

A program according to Aspect 21 includes program codes which, when executed by a computer system, cause the computer system to execute the information processing method according to one of Aspects 18 to 20.

The diagnostic apparatus 12 as an example of an information processing apparatus according to one aspect includes the acquisition unit 76 to obtain detected information of a vibration generated from the pressing machine 11, from the accelerometer 27 having a sampling frequency of 192 kHz or greater, and the detection unit 78 to detect a peak of amplitudes of a vibration waveform having a frequency of 10 kHz or more, preferably 10 to 60 kHz, and more preferably 25 to 55 kHz, in the vibration. As a result, the peak of the vibration waveform in pressing work can be detected with high accuracy.

The accelerometer 27 is an example of a vibration sensor.

The accelerometer 27 is preferably disposed in the pressing machine 11, but may be disposed at a position separated from the pressing machine 11 or may be disposed at the workpiece 20.

The detection unit 78 detects the peak as the start timing at which the punch has started striking the workpiece. This configuration enables accurate detection of the start timing at which the punch 23 has started striking the workpiece 20. In the case where the pressing machine 11 is a shearing machine, the timing at which the punch 23 has cracked the workpiece 20 can be accurately detected.

The diagnostic apparatus 12 includes the storing and reading unit 75 which is an example of a storing control unit that stores peak identification information identifying the peak in the vibration waveform in the storage area 3000 in association with waveform information indicating the vibration waveform. Accordingly, the waveform information and the peak identification information can be utilized in association with each other.

The storing and reading unit 75 stores the waveform information and the peak identification information in the storage area 3000 in association with the identification information identifying the detected information.

Thus, the waveform information and the peak identification information can be utilized in association with the identification information identifying the detected information.

The diagnostic apparatus 12 includes the display control unit 73 that controls the display 68 to display the peak identification information in association with the waveform information. Accordingly, the user can easily grasp the peak identification information in association with the waveform information.

The display control unit 73 controls the display 68 to display the waveform information and the peak identification information in association with the identification information identifying the detected information.

Accordingly, the user can easily grasp the waveform information and the peak identification information in association with the identification information identifying the detected information.

The display control unit 73 controls the display 68 to display the waveform information and the peak identification information in association with the identification information identifying the detected information designated in the designation section 1100 (screen section) that receives the operation of designating the identification information identifying the detected information.

Accordingly, the user can easily grasp the waveform information and the peak identification information corresponding to the detected information having the designated identification information.

The identification information identifying the detected information includes time information indicating the time at which the pressing work has been performed.
Accordingly, the user can easily grasp the waveform information and the peak identification information in association with the time information indicating the time at which the pressing work has been performed.

The diagnostic apparatus 12 includes the communication unit 71 which is an example of the transmission unit that transmits the waveform information and the peak identification information in association with each other to the management server 5 which is an example of the external device.

Thus, the waveform information and the peak identification information can be associated with each other and shared with the management server 5.

The diagnostic apparatus 12 and the communication terminal 3 which are examples of the information processing apparatus according to an aspect include the display control units 73 and 33, respectively. The display control units 73 and 33 control the displays 68 and 308 to display timing information indicating a timing at which the punch 23 has started striking the workpiece 20, in association with the waveform information indicating a waveform of the vibration generated in pressing work of the workpiece 20 by the punch 23, based on an instruction operation to the search buttons 1200 and 2200, respectively. The search buttons 1200 and 2200 are examples of graphical representation for receiving an operation of instructing displaying information on the vibration generated in pressing work of the workpiece 20 by the punch 23.

Accordingly, the user can easily grasp the start timing at which the punch has started striking the workpiece in association with the waveform information.

The display control units 73 and 33 respectively control the displays 68 and 308 to display the waveform information and the timing information in association with the time information indicating the time at which the pressing work has been performed or the workpiece identification information identifying the workpiece 20.

Accordingly, the user can easily grasp the waveform information and the timing information in association with the time information indicating the time at which the pressing work has been performed or the workpiece identification information identifying the workpiece 20.

The diagnostic apparatus 12 and the management server 5 as examples of the information processing apparatus according to one aspect include the communication units 71 and 51 as examples of the transmission unit to transmit the timing information indicating the start timing at which the punch has started striking the workpiece to the management server 5 and the communication terminal 3 as examples of the external device in association with the waveform information. The waveform information indicates the waveform of the vibration generated in pressing work of the workpiece 20 by the punch 23.

Thus, the waveform information and the start timing can be associated with each other and shared with the management server 5 and the communication terminal 3.

The communication units 71 and 51 respectively transmit, to the management server 5 and the communication terminal 3, the waveform information and the timing information in association with the time information indicating the time at which the pressing work has been performed or the workpiece identification information identifying the workpiece 20.

Thus, the waveform information and the timing information can be shared with the management server 5 and the communication terminal 3 in association with the time information indicating the time at which the pressing work has been performed or the workpiece identification information identifying the workpiece 20.

The communication unit 51 of the management server 5 transmits screen information for displaying the data display sections 1300 and 2300 including the waveform information and the timing information to the communication terminal 3.

Thus, the data display sections 1300 and 2300 including the waveform information and the timing information can be shared with the communication terminals 3.

The management server 5 includes the communication unit 51 that receives the waveform information and the timing information in association with the time information indicating the time at which the pressing work has been performed, from the diagnostic apparatus 12, which is an example of the second external device. The communication unit 51 transmits, to the communication terminal 3, the waveform information and the timing information in association with the workpiece identification information identifying the workpiece 20.

As a result, the waveform information and the timing information received in association with the time information indicating the time at which the pressing work has been performed can be transmitted to the communication terminal 3 in association with the workpiece identification information.

The management system 1 as an example of an information processing system according to one aspect includes the diagnostic apparatus 12 and the communication terminal 3 to communicate with the diagnostic apparatus 12. The diagnostic apparatus 12 includes the acquisition unit 76, the detection unit 78, and the communication unit 71. The acquisition unit 76 obtains detected information of a vibration from the accelerometer 27 having a sampling frequency of 192 kHz or greater, disposed in the pressing machine 11. The detection unit 78 detects a peak of amplitudes of a vibration waveform having a frequency of 10 kHz or more, preferably 10 to 60 kHz, and more preferably 25 to 55 kHz, in the vibration. The communication unit 71 transmits the waveform information and the peak identification information in association with each other. The communication terminal 3 includes the communication unit 31 to receive the waveform information and the peak identification information in association with each other, and the display control unit 33 to control the display 308 to display the waveform information and the peak identification information in association with each other.

The management system 1 as an example of the information processing system according to one aspect includes the management server 5, and the diagnostic apparatus 12 as an example of the information processing apparatus to communicate with the management server 5, and the communication terminal 3 as another example of the information processing apparatus to communicate with the management server 5. The diagnostic apparatus 12 includes the acquisition unit 76, the detection unit 78, and the communication unit 71. The acquisition unit 76 obtains detected information of a vibration from the accelerometer 27 having a sampling frequency of 192 kHz or greater, disposed in the pressing machine 11. The detection unit 78 detects a peak of amplitudes of a vibration waveform having a frequency of 10 kHz or more, preferably 10 to 60 kHz, and more preferably 25 to 55 kHz, in the vibration. The communication unit 71 transmits, to the management server 5, the waveform information and the peak identification information in association with the time information indicating the time at which the pressing work has been performed. The management server 5 includes the communication unit 51 to receive, from the information processing apparatus (the diagnostic apparatus 12), the waveform information and the peak identification information in association with the time information, and transmit, to the communication terminal 3, the waveform information and the peak identification information in association with the workpiece identification information identifying the workpiece 20. The communication terminal 3 includes the communication unit 31 to receive the waveform information and the peak identification information in association with the workpiece identification information, and the display control unit 33 to control the display 308 to display the waveform information and the peak identification information in association with the workpiece identification information.

An information processing method according to one aspect includes obtaining detected information of a vibration from the accelerometer 27 having a sampling frequency of 192 kHz or greater, disposed in the pressing machine 11, and detecting a peak of amplitudes of a vibration waveform having a frequency of 10 kHz or more, preferably 10 to 60 kHz, and more preferably 25 to 55 kHz, in the vibration.

An information processing method according to one aspect includes controlling the display 68 or 308 to display timing information indicating a timing at which the punch 23 has started striking the workpiece 20, in association with the waveform information indicating a waveform of the vibration generated in pressing work of the workpiece 20 by the punch 23, based on an instruction operation to the search button 1200 or 2200. The search buttons 1200 and 2200 are examples of graphical representation for receiving an operation of instructing displaying information on the vibration generated in pressing work of the workpiece 20 by the punch 23.

An information processing method according to one aspect includes transmitting the timing information indicating the start timing at which the punch 23 has started striking the workpiece 20 to the management server 5 or the communication terminal 3 as the example of the external device in association with the waveform information. The waveform information indicates the waveform of the vibration generated in pressing work of the workpiece 20 by the punch 23.

A program according to one aspect includes program codes which, when executed by a computer system, cause the computer system to execute one of the above-described information processing methods.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus comprising:
an acquisition unit (76) configured to obtain detected information representing a detected vibration generated in processing on a workpiece; and
a detection unit (78) configured to detect, based on the detected information, a start timing at which a punch has started striking the workpiece and a cracking timing at which the punch has cracked the workpiece.

2. The information processing apparatus according to claim 1,
wherein the detected information includes a vibration waveform of the detected vibration, and
wherein the detection unit (78) is configured to detect the start timing and the cracking timing based on an amplitude of the vibration waveform.

3. The information processing apparatus according to claim 1 or 2, further comprising a storing control unit (75) configured to store, in a memory, at least one of:
the start timing and the cracking timing, and
a time difference between the start timing and the cracking timing.

4. The information processing apparatus according to claim 3,
wherein the storing control unit (75) is configured to store, in the memory, the at least one of the start timing and the cracking timing and the time difference in association with identification information identifying the detected information.

5. The information processing apparatus according to any one of claims 1 to 4, further comprising a display control unit (73) configured to control a display (68) to display at least one of timing information indicating the start timing and the cracking timing, time difference information indicating a time difference between the start timing and the cracking timing, and a comparison result indicating a result of comparison between the time difference and reference information.

6. The information processing apparatus according to claim 5,
wherein the display control unit (73) is configured to control a display to display the at least one of the timing information, the time difference information, and the comparison result in association with identification information identifying the detected information.

7. The information processing apparatus according to claim 6, further comprising:
an operation reception unit (72) configured to receive an operation of designating the identification information identifying the detected information, on a screen section that receives the operation of designating; and
a storing control unit (75) configured to retrieve, from a memory, the at least one of the timing information, the time difference information, and the comparison result corresponding to the designated identification information,
wherein the display control unit (73) is configured to display the at least one of the timing information, the time difference information, and the comparison result in association with the designated identification information.

8. The information processing apparatus according to any one of claims 4, 6, and 7,
wherein the identification information identifying the detected information includes shearing time information indicating a time at which the punch has performed shearing of the workpiece.

9. The information processing apparatus according to any one of claims 1 to 8, further comprising a transmission unit (71) configured to transmit, to an external device external to the information processing apparatus, at least one of timing information indicating the start timing and the cracking timing, time difference information indicating a time difference between the start timing and the cracking timing, and a comparison result indicating a result of comparison between the time difference and reference information.

10. An information processing apparatus comprising:
a display control unit (33; 73) configured to control a display to display at least one of timing information indicating a start timing at which a punch has started striking a workpiece and a cracking timing at which the punch has cracked the workpiece, time difference information indicating a time difference between the start timing and the cracking timing, and a comparison result indicating a result of the comparison between the time difference and reference information.

11. An information processing apparatus comprising:
a transmission unit (51; 71) configured to transmit, to a first external device external to the information processing apparatus, at least one of timing information indicating a start timing at which a punch has started striking a workpiece and a cracking timing at which the punch has cracked the workpiece, time difference information indicating a time difference between the start timing and the cracking timing, and a comparison result indicating a result of comparison between the time difference and reference information.

12. The information processing apparatus according to claim 11, further comprising a reception unit (51) configured to receive, from a second external device external to the information processing apparatus, the at least one of the timing information, the time difference information, and the comparison result in association with shearing time information indicating a time at which the punch has performed shearing of the workpiece,
wherein the transmission unit (51) is configured to transmit, to the first external device, the at least one of the timing information, the time difference information, and the comparison result in association with workpiece identification information identifying the workpiece.

13. An information processing system (1) comprising:
the information processing apparatus (12) according to claim 1; and
a communication terminal (3),
wherein the information processing apparatus (12) further includes a transmission unit (71) configured to transmit, to the communication terminal (3), at least one of timing information indicating the start timing and the cracking timing, time difference information indicating a time difference between the start timing and the cracking timing, and a comparison result indicating a result of comparison between the time difference and reference information; and
wherein the communication terminal (3) includes:
a reception unit (31) configured to receive the at least one of the timing information, the time difference information, and the comparison result; and
a display control unit (33) configured to control a display to display the at least one of the timing information, the time difference information, and the comparison result.

14. An information processing method comprising:
obtaining (S 1; S21), from a sensor, detected information representing a detected vibration generated in processing on a workpiece; and
detecting (S2; S22, S23, S24, S25), based on the detected information, a start timing at which a punch has started striking the workpiece and a cracking timing at which the punch has cracked the workpiece.

15. A carrier medium carrying computer readable codes for controlling a computer system to carry out the method according to claim 14.
